# FASCICULE DE BREVET EUROPEEN

(11) **EP 2 619 429 B1**
(45) Date de publication et mention de la délivrance du brevet: **18.06.2014**
(21) Numéro de dépôt: 11773497.0
(22) Date de dépôt: 14.09.2011
(51) Int. Cl.: F02D 17/02, F02D 41/00, F02D 13/06, F02D 41/14

(54) **PROCÉDÉ DE GESTION D'UNE DÉSACTIVATION DE CYLINDRES D'UN MOTEUR THERMIQUE ET DISPOSITIF DE GESTION D'UN TEL MOTEUR**
VERFAHREN ZUR VERWALTUNG EINER DEAKTIVIERUNG VON ZYLINDERN EINER WÄRMEKRAFTMASCHINE UND VORRICHTUNG ZUR VERWALTUNG EINER DERARTIGEN MASCHINE
METHOD FOR MANAGING A DEACTIVATION OF CYLINDERS OF A HEAT ENGINE, AND DEVICE FOR MANAGING SUCH AN ENGINE

(30) Priorité: 22.09.2010 FR 1057621
(43) Date de publication de la demande: 31.07.2013
(73) Titulaire: Valeo Systèmes de Contrôle Moteur, 95800 Cergy Saint-Christophe (FR)
(72) Inventeur: GELEZ, Nicolas, F-78230 Le Pecq (FR); HOBRAICHE, Julien, F-60710 Chevrieres (FR); FOURNIGAULT, Damien, F-78700 Conflans-Sainte-Honorine (FR)
(74) Mandataire: Cardon, Nicolas
(86) Numéro de dépôt international: PCT/FR2011/052098
(87) Numéro de publication internationale: WO 2012/038641

(56) Documents cités:
- EP-A1- 1 612 393
- EP-A2- 1 054 148
- US-A1- 2003 062 019
- US-A1- 2003 221 655
- US-A1- 2006 005 811
- US-A1- 2009 277 407
- US-A1- 2010 050 993

## Description

L'invention concerne un procédé de gestion d'une désactivation de cylindres d'un moteur thermique et un dispositif de gestion correspondant d'un tel moteur thermique. Ce type de moteur thermique est par exemple utilisable pour la propulsion de véhicules automobiles.

Par « séquence de fonctionnement » d'un moteur thermique à N cylindres, on entendra dans la suite de la description une séquence au cours de laquelle une explosion d'un mélange air-carburant se déroule au plus une fois dans chacun des N cylindres.

On rappelle que le couple global fourni en sortie d'un moteur thermique à N cylindres est la somme des couples individuels fournis en sortie de chacun des N cylindres.

On rappelle également que le rendement global d'un cylindre d'un moteur thermique augmente avec le couple à fournir en sortie dudit cylindre.

Dans une optique de réduction des émissions de polluants, et notamment de gaz à effet de serre, des moteurs thermiques de moins en moins consommateurs en carburant apparaissent. Sur un moteur thermique classique, le point de fonctionnement le plus polluant est atteint lorsque tous les cylindres du moteur fonctionnent à mi-charge.

Sur les moteurs de fortes cylindrées, notamment sur les V8, il est ainsi connu de couper l'alimentation en carburant de la moitié des cylindres autour de ce point de fonctionnement de manière à augmenter la charge unitaire des cylindres restants et donc augmenter leur rendement. Ceci rend le moteur moins polluant.

Toutefois, la plage de fonctionnement durant laquelle l'alimentation en carburant des cylindres est diminuée reste limitée. En effet, seule la moitié des cylindres étant alimentés en carburant, le couple global maximal disponible en sortie de moteur est deux fois moins important que le couple global maximal disponible en sortie de moteur lorsque tous les cylindres sont alimentés en carburant. Il est ainsi possible de réduire l'alimentation en carburant des cylindres mais seulement lorsque le couple demandé en sortie de vilebrequin est inférieur à la moitié du couple global maximal disponible. le moteur reste donc encore très polluant sur une large plage de fonctionnement.

Un procédé de gestion selon le préambule de la revendication 1 est connu de US2009/0277407 A.

Un but de l'invention est de remédier au moins en partie au problème précité, l'invention étant applicable à tous types connus de dispositif de déconnexion de cylindre.

En vue de la réalisation de ce but, on propose, selon l'un des aspects de l'invention, un procédé de gestion d'une désactivation de cylindres d'un moteur thermique à N cylindres selon la revendication 1.

Ainsi, en désactivant X cylindres, entre 1 et N - 1 cylindres, selon le couple à fournir en sortie du moteur, le procédé permet de réduire la consommation du moteur sur une grande plage de fonctionnement de façon optimisée tout en conservant un fonctionnement efficace du moteur.

Selon un mode de réalisation, le procédé comporte en outre l'étape de déterminer les X cylindres à désactiver de manière à maintenir une température relativement homogène entre les N cylindres.

Dans un moteur thermique de l'art antérieur, il s'avère difficile de désactiver la moitié des cylindres pendant une longue période. En effet, lesdits cylindres refroidissent rapidement ce qui diminue grandement leur rendement lorsqu'ils sont de nouveau sollicités. En outre, la pression dans les cylindres désactivés diminue alors progressivement et finit par être inférieure à la pression atmosphérique : de l'huile est ainsi aspirée depuis le carter jusque dans les cylindres désactivés. Cette huile sera ensuite brûlée et les produits polluants de la combustion évacués par le système d'échappement lorsque lesdits cylindres seront de nouveau sollicités.

Le cylindre comporte des soupapes d'admission et d'échappement.

Ces soupapes peuvent être actionnées électromagnétiquement ou non et la désactivation de chaque cylindre fait au moins en fermant la ou les soupapes d'admission de ce cylindre et/ou la ou les soupapes d'échappement. Cette fermeture de soupapes peut résulter de la génération de consignes de fermeture de soupapes à destination du ou des actionneurs de soupapes.

Lorsqu'un cylindre est désactivé, son alimentation en carburant peut ou non également être coupée.

Lorsqu'un cylindre est désactivé, le dispositif d'allumage de ce cylindre peut ou non être désactivé.

Dans un exemple particulier, lorsqu'un cylindre est désactivé, ses soupapes d'admission et d'échappement restent fermées, son alimentation en carburant est coupée et le dispositif d'allumage de ce cylindre est désactivé.

Le procédé peut comporter l'étape de, lors d'une séquence de fonctionnement *i* du moteur et à partir du nombre X de cylindres à désactiver, et notamment d'une information représentative du refroidissement du moteur ou de la localisation dans le moteur des différents cylindres, déterminer les X cylindres à désactiver lors de la séquence de fonctionnement suivante *i*+*1*, notamment de sorte à maintenir une température relativement homogène entre les N cylindres.

Le procédé peut comporter l'étape consistant à déterminer les X cylindres à désactiver pour réduire, notamment minimiser, le gradient de décroissance en température de chaque cylindre désactivé depuis la température résultant de la dernière combustion dans ledit cylindre. Dans un tel cas, le choix des cylindres à désactiver ne vise pas à maintenir une température relativement homogène entre les N cylindres. La température permettant une homogénéité thermique peut en effet être basse et impliquer des émissions polluantes.

Le moteur peut être intégré à un véhicule se comportant comme un système de filtrage passe-bas éliminant ou réduisant les composantes basse fréquence et haute fréquence du couple moteur dans une certaine plage de fonctionnement de vitesse et la détermination des X cylindres à désactiver peut être telle que le moteur thermique dont des cylindres sont déconnectés ait une plage de fonctionnement s'approchant le plus possible de la plage de fonctionnement du moteur en l'absence de désactivation de cylindre(s).

Le contenu spectral du couple global peut ainsi être tel que le passage par les différentes fonctions de transfert de filtrage conventionnelles du véhicule (embrayage, boite de vitesse, silent block moteur et boite, châssis du véhicule...) n'engendre pas de désagrément pour l'utilisateur final du véhicule. Du fait de cette absence de désagréments, il n'est alors pas nécessaire de modifier des organes mécaniques conventionnels.

L'une et/ou l'autre des deux déterminations des X cylindres à désactiver qui précèdent immédiatement peuvent être effectuées lors d'une séquence i et la désactivation de ces X cylindres peut avoir lieu lors de la séquence de fonctionnement suivante i+1.

L'une et/ou l'autre de ces deux déterminations des X cylindres à désactiver peut être effectuée de manière à ce que lorsque plusieurs séquences se succèdent et lorsque l'ordre d'allumage des cylindres est le même d'une séquence à l'autre, la séquence globale résultant de l'ensemble des séquences et ordonnée selon l'ordre d'allumage des cylindres, que les cylindres soient effectivement allumés ou non, comporte en alternance un nombre constant de cylindres consécutifs désactivés et/ou un nombre constant de cylindres consécutifs non désactivés. Il y a par exemple pendant toute la séquence globale une alternance de n1 cylindres consécutifs désactivés et de n2 cylindres consécutifs non désactivés Le nombre n1 de cylindres consécutifs désactivés peut être égal ou non au nombre n2 de cylindres consécutifs non désactivés. D'une séquence de fonctionnement à l'autre, le nombre de cylindres désactivés peut varier, notamment lorsque le nombre de cylindres est impair.

Le procédé selon l'invention permet de désactiver plus longtemps des cylindres du moteur en limitant un refroidissement desdits cylindres.

L'invention a également pour objet un dispositif de gestion d'un moteur thermique selon la revendication 13.

L'unité de commande est en particulier configurée pour déterminer les X cylindres à désactiver tel que décrit précédemment en rapport avec le procédé.

L'invention sera mieux comprise à la lumière de la description qui suit d'un mode de mise en oeuvre particulier non limitatif de l'invention.

Il sera fait référence aux figures ci-jointes, parmi lesquelles :
- la figure 1 est un graphe illustrant, en fonction du couple disponible en sortie d'un moteur thermique mettant en oeuvre le procédé selon l'invention, la consommation spécifique dudit moteur pour différents nombres de cylindres désactivés à un même régime moteur donné;
- la figure 2 est un graphe illustrant, en fonction du régime moteur du moteur de la figure 1, le couple disponible en sortie dudit moteur pour différents nombres de cylindres désactivés ;
- la figure 3 est une vue très schématique d'un bloc moteur du moteur thermique de la figure 1 mettant en oeuvre le procédé selon l'invention,
- les figures 4 à 8 représentent respectivement le couple global du moteur, la représentation spectrale de ce couple moteur et les températures des parois de cylindres du moteur lorsqu'aucun cylindre n'est désactivé,
- les figures 9 à 13 sont analogues aux figures 4 à 8 mais se rapportent à un exemple de stratégie de désactivation des cylindres et,
- les figures 14 à 18 sont analogies aux figures 9 à 13 mais se rapportent à un autre exemple de stratégie de désactivation des cylindres.

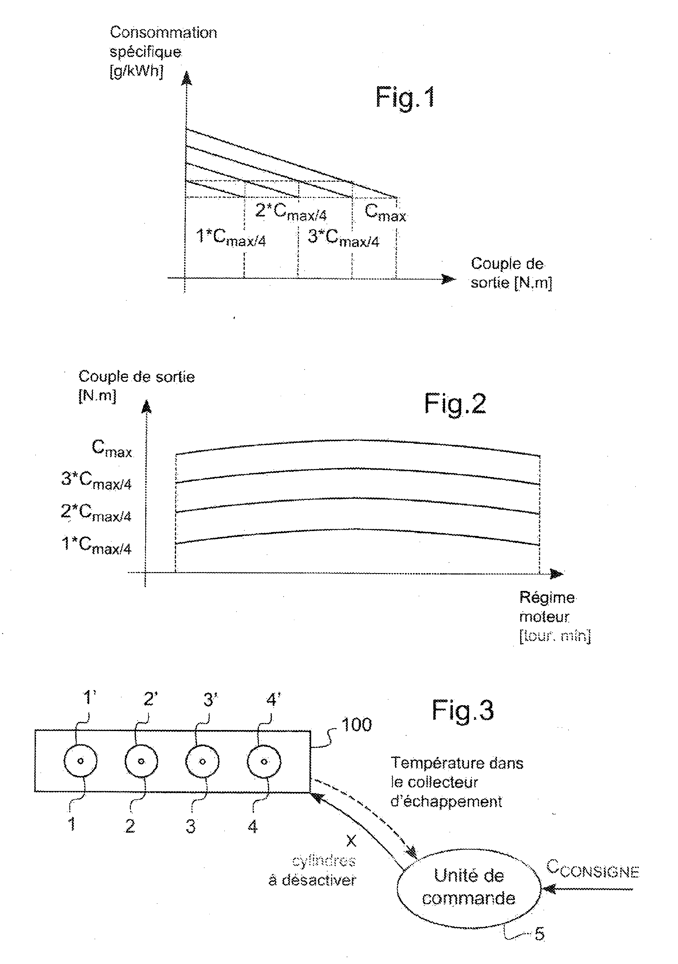

En référence à la figure 3, le procédé selon l'invention est ici détaillé en référence à un moteur thermique d'une voiture. Le moteur thermique est un moteur à combustion interne comportant un bloc moteur 100 qui comporte quatre cylindres 1, 2, 3, 4 en ligne (numérotés de gauche à droite selon l'orientation de la figure 3) formant des chambres de combustion recevant chacun à coulissement un piston.

Les cylindres 1, 2, 3, 4 sont reliés à un système d'admission d'air et d'injection de carburant, et à un système d'échappement, et sont pourvus d'une bougie d'allumage respectivement 1', 2', 3', 4'. Classiquement, au cours d'une séquence de fonctionnement du moteur, la première bougie l'est la première allumée puis successivement la troisième, quatrième et deuxième bougie 3', 4' et 2'. Une explosion du mélange air-carburant se déroule ainsi dans le cylindre 1 puis dans les cylindres 3, 4, 2. Il n'est possible de désactiver un cylindre qu'une fois l'explosion du mélange air-carburant réalisé dans ledit cylindre.

Chaque cylindre est ici équipé de soupapes d'admission et de soupapes d'échappement le reliant aux systèmes d'admission et d'échappement, et d'un injecteur de carburant. Au moins les soupapes d'admission sont associées à des actionneurs électromagnétiques de soupapes, connus en eux-mêmes, permettant un actionnement individuel des soupapes de sorte qu'elles peuvent être ouvertes ou fermées indépendamment des autres soupapes. Les dispositifs individuels de gestion de soupape étant connus de l'art antérieur, ils ne seront pas décrits plus en détail ici. L'invention est utilisable avec tout système permettant un actionnement individuel des soupapes. Une version dégradée de l'invention peut également être mise en oeuvre avec un système simplement agencé pour couper de manière commandée l'alimentation en carburant de chacun des cylindres dans le cas des moteurs à injection directe.

Le fonctionnement du moteur thermique est commandé par une unité de commande moteur 5 ou ECU (pour « Engine Control Unit ») qui détermine des instructions de commande du moteur (comme la quantité de carburant injecté et le débit d'air d'admission) en fonction de la demande d'accélération du conducteur (enfoncement de la pédale d'accélération) et des valeurs détectées de paramètres de fonctionnement du moteur.

En fonctionnement, le conducteur, qui souhaite rouler à une vitesse Vᵥₒᵢₜᵤᵣₑ donnée, agit sur la pédale d'accélération. L'unité de commande du moteur 5 calcule, à partir de l'enfoncement de la pédale d'accélération, une consigne de couple global C_{consigne} à fournir en sortie du moteur pour que la voiture atteigne la vitesse Vᵥₒᵢₜᵤᵣₑ requise.

Selon l'invention, à partir du couple global C_{consigne}, l'unité de commande 5 détermine un nombre X de cylindres à désactiver parmi les quatre cylindres 1, 2, 3, 4 du moteur afin que les cylindres actifs aient un rendement individuel maximisé tout en procurant le couple global C_{consigne} requis. On cherche ainsi à optimiser le remplissage des cylindres restant activés. L'unité de commande 5 génère alors des consignes de fermeture de soupape à destination des actionneurs de soupapes des X cylindres à désactiver.

A cet effet, l'unité de commande 5 intègre des formules ou des tables de fonctionnement du moteur mettant en relation le couple global disponible en sortie du moteur et une consommation spécifique du moteur pour X cylindres désactivés à un même régime moteur donné (figure 1) et des formules ou tables mettant en relation le régime moteur et le couple global disponible en sortie du moteur pour X cylindres désactivés (figure 2). A la figure 1, il est ainsi visible que même la désactivation d'un unique cylindre sur les quatre cylindres 1, 2, 3, 4 du moteur permet de diminuer la consommation spécifique du moteur. En fonction du couple global C_{consigne} à fournir en sortie de moteur, l'unité de commande 5 détermine donc le nombre maximum de cylindres pouvant être désactivés de façon à réduire au maximum la consommation spécifique du moteur. Plus la consigne de couple global C_{consigne} est faible, plus l'unité de commande 5 désactive un nombre important de cylindres. Il est ainsi possible de réduire au mieux la consommation spécifique du moteur sur une large plage de fonctionnement.

Selon l'invention, l'unité de commande 5 détermine les X cylindres à désactiver selon la plage de fonctionnement du moteur, de sorte à limiter un refroidissement des cylindres du moteur durant une désactivation. Les cylindres 1 et 4 étant en périphérie du bloc moteur, ils assurent une meilleure diffusion thermique vers le centre du bloc moteur 100 que les cylindres 2 et 3 vers les périphéries du bloc moteur 100. Ainsi, l'unité de commande 5 privilégie la désactivation des cylindres 2 et 3. En outre, le vilebrequin est moins sollicité lorsqu'il est entraîné en rotation uniquement par les pistons des cylindres 1 et 4 que s'il était entraîné en rotation uniquement par les pistons des cylindres 2 et 3.

Selon un mode de réalisation privilégié, en plus d'intégrer des équations ou tables de fonctionnement du moteur, l'unité de commande 5 reçoit du moteur une information caractéristique de l'état dudit moteur, par exemple une température des gaz dans le collecteur d'échappement de chacun des quatre cylindres 1, 2, 3, 4.

Ainsi, lors d'une séquence de fonctionnement i du moteur, à partir du nombre X de cylindres à désactiver et de la température des gaz dans le collecteur d'échappement de chacun des cylindres 1, 2, 3, 4, l'unité de commande 5 détermine les X cylindres à désactiver à la séquence de fonctionnement suivante i+1 du moteur afin de maintenir une température relativement homogène entre les quatre cylindres 1, 2, 3, 4. Préférablement, l'unité de commande 5 détermine les X cylindres à désactiver de sorte à en outre minimiser une variation de la température globale du moteur autour de la température de fonctionnement nominale du moteur.

Ainsi, l'unité de commande alterne à chaque séquence de fonctionnement du moteur, les cylindres actifs et inactifs de façon à limiter un refroidissement des cylindres et à conserver une température globale du moteur proche de la température nominale de fonctionnement.

Comme il a déjà été mentionné, un cylindre ne peut être désactivé qu'une fois l'explosion du mélange air-carburant réalisée dans ledit cylindre. Comme tous les cylindres 1, 2, 3, 4 du moteur fonctionnent en décalé (l'explosion se déroulant successivement dans chacun des quatre cylindres, l'échappement des gaz brûlés et l'admission d'un nouveau mélange air-carburant se déroulent également successivement dans chacun des quatre cylindres), au début d'une séquence de fonctionnement, certains cylindres ont déjà admis un mélange air-carburant. Dans ce cas, l'explosion aura lieu dans lesdits cylindres même si les cylindres ont été désactivés en début de séquence de fonctionnement. Ceci peut avoir des conséquences graves sur le moteur si la soupape d'échappement des gaz brûlés est bloquée du fait de la désactivation du cylindre.

L'unité de commande 5 ne peut donc désactiver les X cylindres arbitrairement en début de chaque séquence de fonctionnement. Ainsi, l'unité de commande 5 détermine uniquement à chaque début de séquence de fonctionnement i les X cylindres à désactiver lors de la séquence de fonctionnement suivante i+1. Puis, au cours de la séquence de fonctionnement i du moteur, l'unité de commande 5 désactive chacun des X cylindres un par un, une fois que l'explosion du mélange air-carburant s'est réalisée dans le cylindre correspondant. En l'occurrence, l'unité de commande 5 génère des consignes de fermeture de soupape à destination successivement de chacun des actionneurs de soupapes des X cylindres jusqu'à ce que soient désactivés lesdits X cylindres.

L'unité de commande 5 empêche ainsi une admission d'un nouveau mélange air-carburant lors de la séquence de fonctionnement i dans les X cylindres à désactiver de sorte qu'au début de la séquence de fonctionnement suivante i+1, aucun des X cylindres ne contiennent de mélange air-carburant. Chacun des X cylindres sera ainsi actif au cours de la séquence de fonctionnement i et désactivé pour la séquence de fonctionnement i+1.

De préférence, chacun des quatre cylindres 1, 2, 3, 4 est au moins une fois actif et au moins une fois désactivé au cours de quatre séquences successives de fonctionnement du moteur. L'unité de commande 5 détermine un enchaînement de désactivation pour quatre séquences successives de fonctionnement du moteur :

| | |
|---|---|
| Première séquence | 3 -> 4 -> 2 |
| Deuxième séquence | 1 -> 4 -> 2 |
| Troisième séquence | 1 -> 3 -> 4 -> 2 |
| Quatrième séquence | 1 -> 3 -> 4 |

L'unité de commande 5 évite ainsi au maximum qu'un même cylindre soit désactivé sur deux séquences successives de fonctionnement de moteur. Ceci facilite le maintien d'une température homogène à l'intérieur du moteur ainsi qu'une température du moteur proche de la température nominale de fonctionnement. Des phénomènes de refroidissement de cylindres et d'aspiration d'huile, précédemment décrits, sont alors limités.

Bien entendu l'invention n'est pas limitée au mode de mise en oeuvre décrit et on peut y apporter des variantes de réalisation sans sortir du cadre de l'invention tel que défini par les revendications.

En particulier, bien qu'ici le choix des cylindres à désactiver est réalisé en s'appuyant sur la température des gaz dans le collecteur d'échappement, l'unité de commande pourra s'appuyer sur toute autre information représentative du refroidissement du moteur, seule ou en complément d'une autre information : température du liquide de refroidissement du moteur, température du liquide de lubrification du moteur, pression des gaz dans le collecteur d'échappement du moteur ...

En outre, bien qu'ici le procédé soit appliqué à un moteur thermique à quatre cylindres, le procédé sera applicable à tout type de moteur thermique ainsi qu'à tout type de dispositif permettant une désactivation de cylindres. On pourra ainsi appliquer l'invention à un moteur qui n'est pas à allumage commandé comme un moteur diesel.

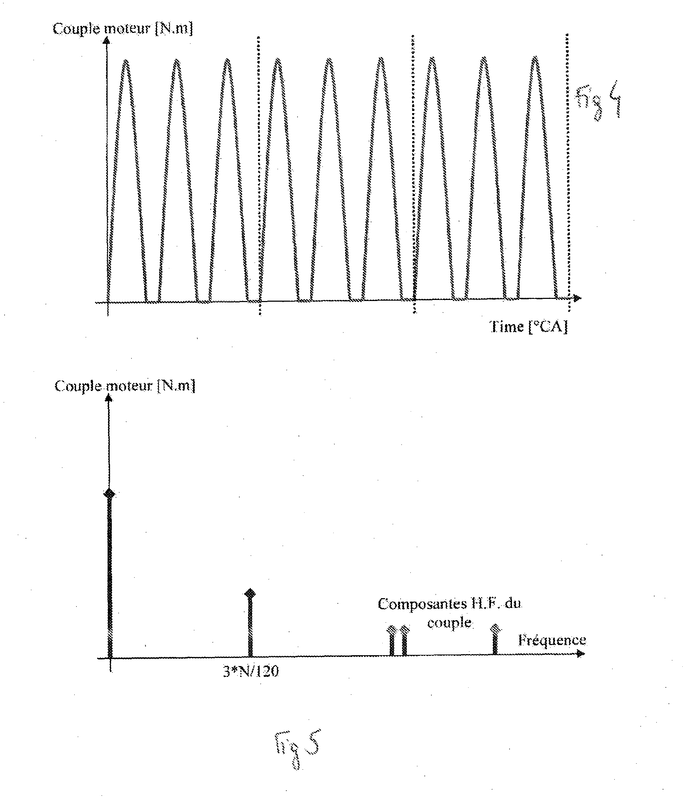

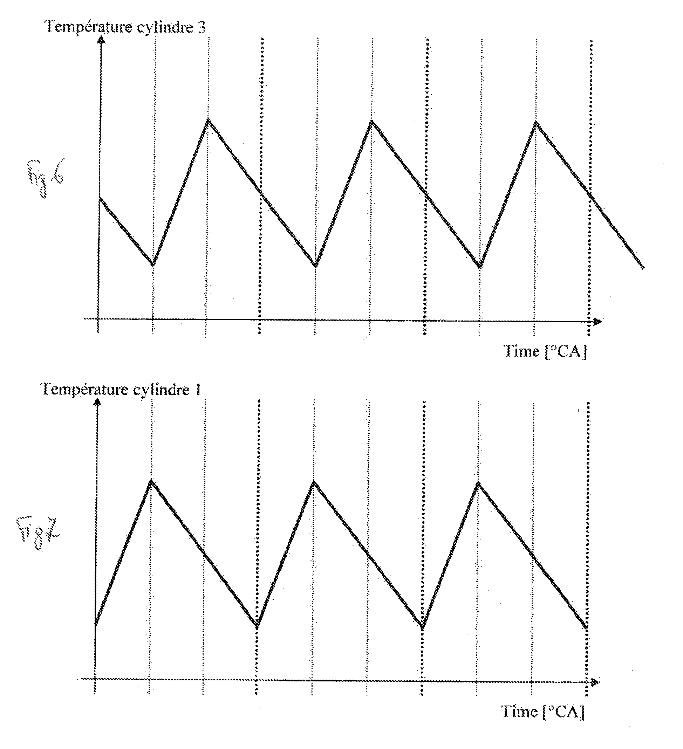

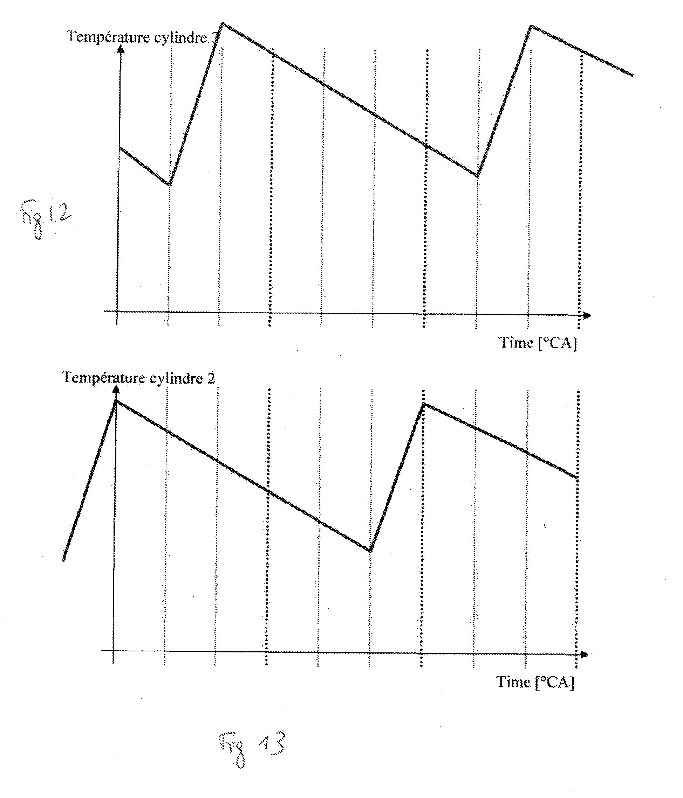

On va maintenant décrire en référence aux figures 4 à 18 un exemple de détermination des X cylindres à désactiver selon l'invention et de fonctionnement du moteur thermique lorsque ces X cylindres sont désactives.

Le moteur thermique est ici un moteur thermique à trois cylindres 1, 2 et 3. L'ordre d'allumage des cylindres est 1, 3 et 2.

Les figures 4 à 8 représentent respectivement le couple global en fonction de l'angle du vilebrequin qui est délivré par le moteur thermique lorsqu'aucun des cylindres n'est déconnecté, ledit couple après application de la transformée de Fourier et la température des parois de chaque cylindre.

Sur ces courbes, N est la vitesse de rotation du moteur en tr/min. Le moteur est intégré à un véhicule ayant un système de base configuré pour filtrer les composants hautes fréquences du couple et la composante basse fréquence de ce couple que l'on peut observer sur la figure 4. Le moteur a par exemple une plage de fonctionnement de vitesse comprise entre 700 tr/min et 6500 tr/min.

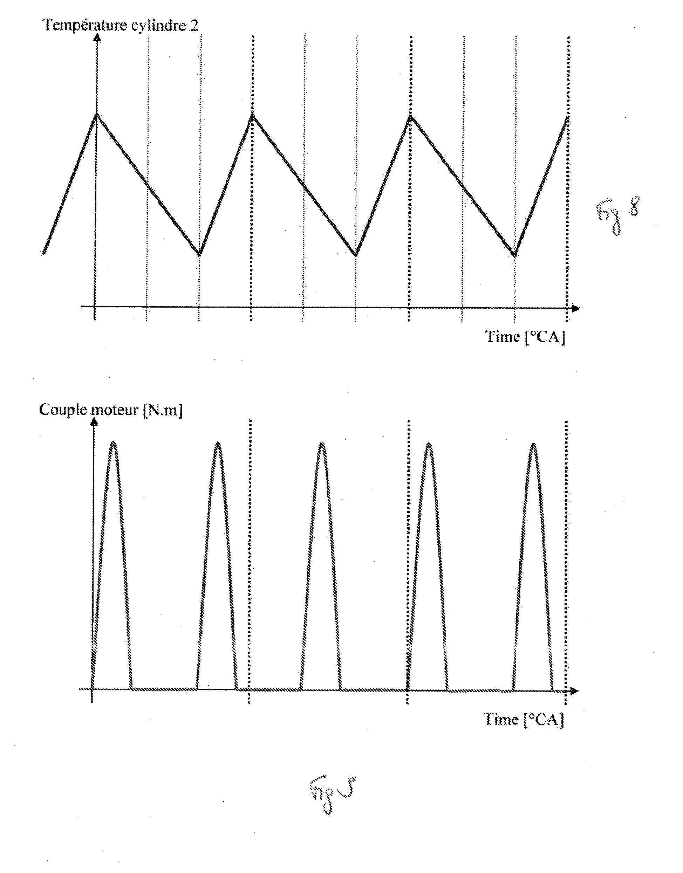

Les figures 9 à 13 portent sur le moteur thermique des figures 4 à 8 dont les soupapes d'admission et d'échappement sont commandées selon un exemple de mise en oeuvre de l'invention. La séquence globale ci-dessous résulte de la succession de plusieurs séquences de fonctionnement. D'une séquence à l'ordre, l'ordre d'allumage des cylindres reste le même dans l'exemple ci-dessous et la séquence globale est ordonnée selon ledit ordre d'allumage. Il n'est cependant pas nécessaire que tous les cylindres soient effectivement allumés chacun leur tour lors de la séquence globale.

1-2 -3-1-2-3-1-2-3-

Comme on peut le voir, lors de cette séquence globale, le nombre de cylindres consécutifs désactivés peut rester constant. Ici, ce nombre est égal à 1 et il est égal au nombre de cylindres consécutifs activés. L'invention n'est cependant pas limitée à une telle alternance parfaite de cylindres activés et de cylindres désactivés le long de la séquence globale. On constate également qu'entre deux séquences successives, le nombre de cylindres désactivés peut différer. Dans le cas présent, seul le cylindre 3 est désactivé lors de la première séquence tandis que deux cylindres 1 et 2 sont désactivés lors de la deuxième séquence.

Comme on peut le voir sur les figures, la composante basse fréquence du couple est égale à 1,5*N/120 contre 3*N/120 en l'absence de déconnexion de soupapes. Ainsi, le système de base lorsqu'il n'est pas modifié permet pour le moteur la plage de fonctionnement de vitesse suivante : 1400 tr/min; 6500 tr/min.

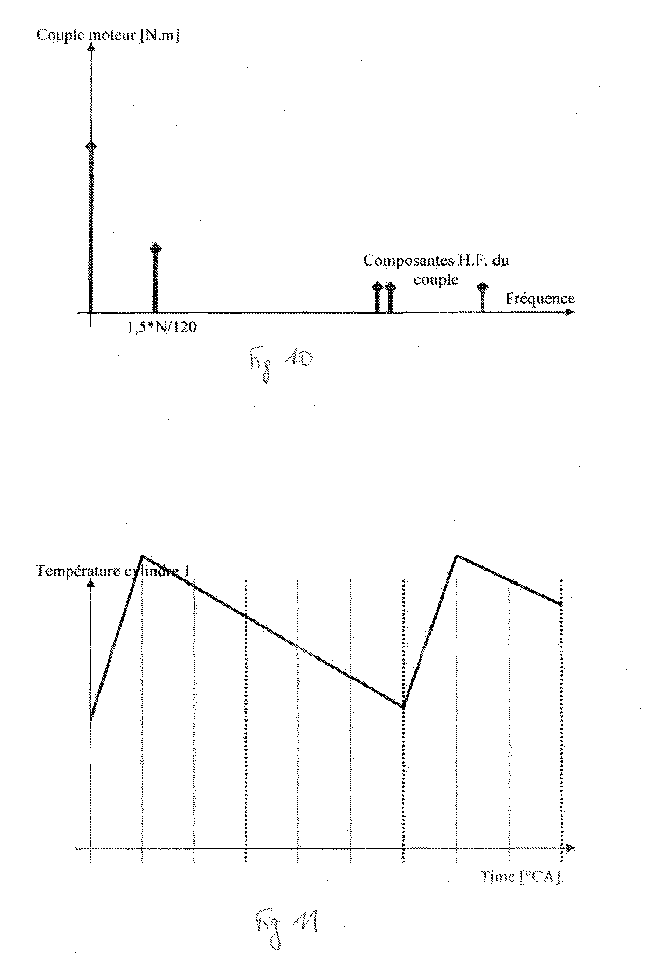

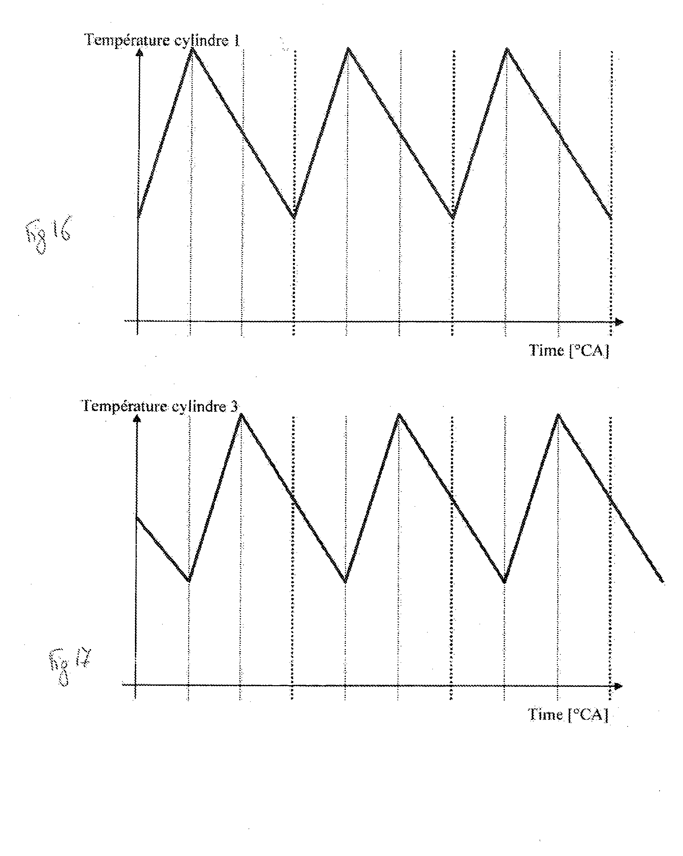

On constate également en observant les figures 11 à 13 que le gradient de décroissance en température des cylindres désactivés depuis la température résultant de la dernière combustion est faible, étant inférieur à celui que l'on peut déduire des figures 16 à 18.

Comme on peut le voir sur les figures 9 à 13, la charge unitaire de chaque cylindre augmente pour que le couple global reste le même. La désactivation de cylindres a pour conséquence d'augmenter la température à la fin de la combustion, ce qui permet de réduire les émissions polluantes.

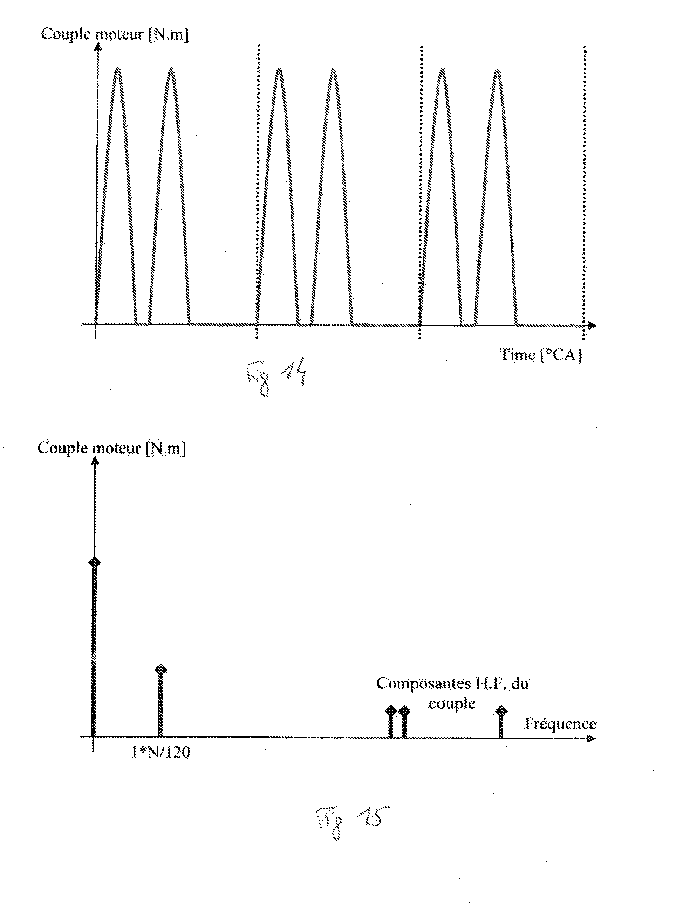

Dans l'exemple des figures 14 à 18, qui porte sur un autre exemple de stratégie de désactivation de soupapes, la composante basse fréquence du couple global vaut N/120. Avec le système de base du moteur non modifié, la plage de fonctionnement de vitesse est comprise entre 2100 tr/min et 6500 tr/min, ce qui supprime la plage comprise entre 1400 tr/min et 2100 tr/min, permise dans le cas des figures 9 à 13 et dans laquelle de nombreux points de fonctionnement du moteur se trouvent.

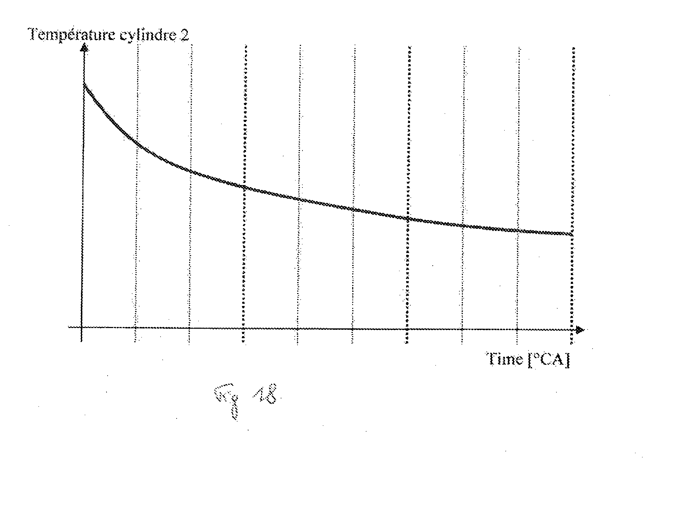

On constate par ailleurs sur la figure 18 que le cylindre 2 diverge en température. Sa réactivation causera alors une pollution importante.

## Revendications

1. Procédé de gestion d'une désactivation de cylindres (1, 2, 3, 4) d'un moteur thermique à N cylindres, le procédé comportant l'étape de, lors du fonctionnement du moteur, à partir d'un couple global C_{consigne} à fournir en sortie du moteur, déterminer un nombre de cylindres X à désactiver parmi les N cylindres du moteur de sorte à maximiser le rendement individuel de chacun des N - X cylindres actifs tout en ce que les N - X cylindres actifs engendrent le couple global requis, des soupapes d'admission et des soupapes d'échappement étant associées aux cylindres et la désactivation de chaque cylindre étant effectuée au moins en fermant la ou les soupapes d'admission de ce cylindre et/ou la ou les soupapes d'échappement de ce cylindre, **caractérisé en ce que** le procédé comporte l'étape consistant à déterminer les X cylindres à désactiver pour que le couple global ait une composant spectrale basse fréquence à une fréquence supérieure à une valeur prédéfinie.

2. Procédé selon la revendication 1, les soupapes d'admission et les soupapes d'échappement du moteur étant actionnées électromagnétiquement.

3. Procédé selon la revendication 1 ou 2, comportant l'étape de, lors d'une séquence de fonctionnement *i* du moteur et à partir du nombre X de cylindres à désactiver, déterminer les X cylindres à désactiver lors de la séquence de fonctionnement suivante *i*+1.

4. Procédé selon l'une quelconque des revendications 1 à 3, comportant l'étape consistant à déterminer les X cylindres à désactiver pour réduire, notamment minimiser, le gradient de décroissance en température de chaque cylindre désactivé depuis la température résultant de la dernière combustion dans ledit cylindre.

5. Procédé selon la revendication 3 ou 4, la détermination des X cylindres à désactiver étant effectuée de manière à ce que lorsque plusieurs séquences de fonctionnement du moteur se succèdent et lorsque l'ordre d'allumage des cylindres est le même d'une séquence à l'autre, la séquence globale résultant de l'ensemble des séquences de fonctionnement et ordonnée selon l'ordre d'allumage desdits cylindres comporte un nombre constant de cylindres consécutifs désactivés et/ou un nombre constant de cylindres consécutifs non désactivés.

6. Procédé selon la revendication 5, le nombre de cylindres consécutifs désactivés étant égal au nombre de cylindres consécutifs non désactivés.

7. Procédé selon l'une quelconque des revendications 1 à 3, comportant en outre l'étape de déterminer les X cylindres à désactiver de manière à maintenir une température relativement homogène entre les N cylindres (1, 2, 3, 4).

8. Procédé selon la revendication 7, le procédé comportant l'étape de, lors d'une séquence de fonctionnement *i* du moteur et à partir du nombre X de cylindres à désactiver et d'une information représentative du refroidissement du moteur ou de la localisation des différents cylindres dans le moteur, déterminer les X cylindres à désactiver lors de la séquence de fonctionnement suivante *i*+1 de sorte à maintenir une température relativement homogène entre les N cylindres (1, 2, 3, 4).

9. Procédé selon la revendication 8, dans lequel, au cours de la séquence de fonctionnement i du moteur, une explosion d'un mélange air-carburant se déroule une fois dans chacun des N cylindres (1, 2, 3, 4), le procédé comportant l'étape de, au cours de la séquence de fonctionnement i du moteur, désactiver chacun des X cylindres une fois que l'explosion du mélange air-carburant se soit réalisée dans le cylindre correspondant.

10. Procédé selon la revendication 8, dans lequel l'information représentative du refroidissement du moteur est une température dans le collecteur d'échappement du moteur.

11. Procédé selon la revendication 8, dans lequel on détermine, à la séquence de fonctionnement *i* du moteur, les X cylindres à désactiver de manière à en outre minimiser une variation de la température globale du moteur autour de la température de fonctionnement nominale du moteur.

12. Procédé selon la revendication 8, dans lequel chaque cylindre (1, 2, 3, 4) est au moins une fois actif et au moins une fois désactivé au cours de N séquences de fonctionnement du moteur.

13. Dispositif de gestion d'un moteur thermique à N cylindres pour mettre en oeuvre le procédé selon l'une des revendications précédentes, chaque cylindre (1, 2, 3, 4) étant équipé d'au moins une soupape d'admission et d'au moins une soupape d'échappement et au moins la soupape d'admission étant associée à un actionneur de soupape, le dispositif comportant une unité de commande (5) pour déterminer un nombre de cylindres X à désactiver parmi les N cylindres du moteur en suivant le procédé selon l'une des revendications 1 à 12, l'unité de commande générant des consignes de fermeture de soupape à destination de l'actionneur de soupape des X cylindres à désactiver.

## Patentansprüche

1. Verfahren zur Verwaltung einer Deaktivierung von Zylindern (1, 2, 3, 4) einer Wärmekraftmaschine mit N Zylindern, wobei das Verfahren beim Betrieb des Motors den Schritt umfasst, aus einem globalen Drehmoment C_{sollwert,} das am Ausgang des Motors zu liefern ist, eine Anzahl von zu deaktivierenden Zylindern X unter den N Zylindern des Motors zu bestimmen, um die individuelle Leistung jedes einzelnen der N-X aktiven Zylinder zu maximieren, wobei die N-X aktiven Zylinder das erforderliche globale Drehmoment erzeugen,
wobei Einlassventile und Auslassventile mit den Zylindern verbunden sind und die Deaktivierung jedes Zylinders mindestens durch Schließen des oder der Einlassventile dieses Zylinders und/oder des oder der Auslassventile dieses Zylinders erfolgt, **dadurch gekennzeichnet, dass** das Verfahren den Schritt umfasst, der darin besteht, die X zu deaktivierenden Zylinder zu bestimmen, damit das globale Drehmoment eine Niederfrequenzspektralkomponente mit einer höheren Frequenz als ein vordefinierter Wert hat.

2. Verfahren nach Anspruch 1, wobei die Einlassventile und die Auslassventile des Motors elektromagnetisch betätigt werden.

3. Verfahren nach Anspruch 1 oder 2, umfassend den Schritt, bei einer Betriebssequenz i des Motors und ab der Anzahl X von zu deaktivierenden Zylindern die X zu deaktivierenden Zylinder bei der folgenden Betriebssequenz *i+1* zu bestimmen.

4. Verfahren nach einem der Ansprüche 1 bis 3, umfassend den Schritt, der darin besteht, die X zu deaktivierenden Zylinder zu bestimmen, um den Temperaturabnahmegradienten jedes deaktivieren Zylinders von der Temperatur, das sich aus der letzten Verbrennung im Zylinder ergibt, zu verringern, insbesondere zu minimieren.

5. Verfahren nach Anspruch 3 oder 4, wobei die Bestimmung der X zu deaktivierenden Zylinder derart erfolgt, dass, wenn mehrere Betriebssequenzen des Motors aufeinander folgen, und wenn die Zündreihenfolge der Zylinder von einer Sequenz zur anderen dieselbe ist, die globale Sequenz, die sich aus der Gesamtheit der Betriebssequenzen ergibt und nach der Zündreihenfolge der Zylinder geordnet ist, eine konstante Anzahl von deaktivierten aufeinanderfolgenden Zylindern und/oder eine konstante Anzahl von nicht deaktivierten aufeinanderfolgenden Zylindern umfasst.

6. Verfahren nach Anspruch 5, wobei die Anzahl von deaktivieren aufeinanderfolgenden Zylindern gleich der Anzahl von nicht deaktivierten aufeinanderfolgenden Zylindern ist.

7. Verfahren nach einem der Ansprüche 1 bis 3, ferner umfassend den Schritt der Bestimmung der X zu deaktivierenden Zylinder, um eine relativ homogene Temperatur zwischen den N Zylindern (1, 2, 3, 4) aufrechtzuerhalten.

8. Verfahren nach Anspruch 7, wobei das Verfahren den Schritt umfasst, bei einer Betriebssequenz i des Motors und ab der Anzahl X von zu deaktivierenden Zylindern und einer Information, die für die Kühlung des Motors oder die Lokalisierung der verschiedenen Zylinder im Motor repräsentativ ist, die X zu deaktivierenden Zylinder bei der folgenden Betriebssequenz *i+1* zu bestimmen, um eine relativ homogene Temperatur zwischen den N Zylindern (1, 2, 3, 4) aufrechtzuerhalten.

9. Verfahren nach Anspruch 8, bei dem während der Betriebssequenz i des Motors eine Explosion des Luft-Kraftstoff-Gemisches einmal in jedem der N Zylinder (1, 2, 3, 4) stattfindet, wobei das Verfahren den Schritt umfasst, während der Betriebssequenz i des Motors jeden der X Zylinder zu deaktivieren, wenn die Explosion des Luft-Kraftstoff-Gemisches in dem entsprechenden Zylinder stattgefunden hat.

10. Verfahren nach Anspruch 8, bei dem die für die Kühlung des Motors repräsentative Information eine Temperatur im Auspuffkrümmer des Motors ist.

11. Verfahren nach Anspruch 8, bei dem bei der Betriebssequenz i des Motors die X zu deaktivierenden Zylinder bestimmt werden, um ferner eine Variation der globalen Temperatur des Motors um die nominale Betriebstemperatur des Motors zu minimieren.

12. Verfahren nach Anspruch 8, bei dem jeder Zylinder (1, 2, 3, 4) während N Betriebssequenzen des Motors mindestens einmal aktiv und mindestens einmal deaktiviert ist.

13. Vorrichtung zur Verwaltung einer Wärmekraftmaschine mit N Zylindern, um das Verfahren nach einem der vorhergehenden Ansprüche einzusetzen, wobei jeder Zylinder (1, 2, 3, 4) mit mindestens einem Einlassventil und mindestens einem Auslassventil versehen ist, und wobei mindestens das Einlassventil mit einem Ventilbetätigungselement verbunden ist, wobei die Vorrichtung eine Steuereinheit (5) umfasst, u eine zu deaktivierende Anzahl von Zylinder X unter den N Zylindern des Motors nach dem Verfahren nach einem der Ansprüche 1 bis 12 zu bestimmen, wobei die Steuereinheit Sollwerte für den Ventilverschluss in Richtung des Ventilbetätigungselements für die X zu deaktivierenden Zylinder erzeugt.

## Claims

1. Method for managing a deactivation of cylinders (1, 2, 3, 4) of an N-cylinder combustion engine, the method comprising the step of, while the engine is running, and upwards of an overall torque Cₛₑₜₚₒᵢₙₜ that is to be provided at engine output, determining a number X of cylinders to be deactivated out of the N cylinders of the engine so as to maximize the individual output of each of the N-X active cylinders with the N-X active cylinders still generating the required overall torque,
inlet valves and exhaust valves being associated with the cylinders and the deactivation of each cylinder being performed at least by closing the inlet valve or valves of this cylinder and/or the exhaust valve or valves of this cylinder, **characterized in that** the method involves the step of determining the X cylinders to be deactivated so that the overall torque has a low-frequency spectral component at a frequency higher than a predefined value.

2. Method according to Claim 1, the inlet valves and the exhaust valves of the engine being operated electromagnetically.

3. Method according to Claim 1 or 2, comprising the step of, during an engine operating sequence i and on the basis of the number X of cylinders to be deactivated, determining the X cylinders to be deactivated during the next operating sequence *i*+1.

4. Method according to any one of Claims 1 to 3, comprising the step that consists in determining the X cylinders to be deactivated in order to reduce, notably to minimize, the temperature drop gradient of each deactivated cylinder from the temperature resulting from the last combustion in the said cylinder.

5. Method according to Claim 3 or 4, the X cylinders to be deactivated being determined in such a way that when several engine operating sequences succeed one another and when the firing order of the cylinders is the same from one sequence to the other, the overall sequence resulting from all of the operating sequences and ordered in the firing order of the said cylinders comprises a constant number of consecutive cylinders deactivated and/or a constant number of consecutive cylinders not deactivated.

6. Method according to Claim 5, the number of consecutive cylinders deactivated being equal to the number of consecutive cylinders not deactivated.

7. Method according to any one of Claims 1 to 3, further comprising the step of determining the X cylinders to be deactivated in such a way as to maintain a relatively consistent temperature between the N cylinders (1, 2, 3, 4).

8. Method according to Claim 7, the method comprising the step of, during an engine operating sequence i and on the basis of the number X of cylinders to be deactivated and of information indicative of the engine cooling or the location of the various cylinders within the engine, determining the X cylinders to be deactivated during the next operating sequence *i*+1 so as to maintain a relatively consistent temperature between the N cylinders (1, 2, 3, 4).

9. Method according to Claim 8, in which, during the engine operating sequence i, a detonation of an air-fuel mixture takes place once in each of the N cylinders (1, 2, 3, 4), the method comprising the step of, during the engine operating sequence i deactivating each of the X cylinders once the air-fuel mixture has been detonated in the corresponding cylinder.

10. Method according to Claim 8, in which the information indicative of the engine cooling is a temperature in the engine exhaust manifold.

11. Method according to Claim 8, in which, in the engine operating sequence i, the X cylinders to be deactivated are determined in such a way as also to minimize a variation in the overall temperature of the engine about the nominal engine operating temperature.

12. Method according to Claim 8, in which each cylinder (1, 2, 3, 4) is active at least once and deactivated at least once during N engine operating sequences.

13. Device for managing an N-cylinder combustion engine to implement the method according to one of the preceding claims, each cylinder (1, 2, 3, 4) being equipped with at least one inlet valve and with at least one exhaust valve and at least the inlet valve being associated with a valve actuator, the device comprising a control unit (5) for determining a number X of cylinders to be deactivated out of the N cylinders of the engine according to the method according to one of Claims 1 to 12, the control unit generating valve closure instructions intended for the valve actuator of the X cylinders to be deactivated.
